(19) Europäisches Patentamt

European Patent Office

Office européen des brevets

(11) **EP 4 644 251 A1**

(12) **EUROPEAN PATENT APPLICATION**

(43) Date of publication:
**05.11.2025 Bulletin 2025/45**

(21) Application number: **24173131.4**

(22) Date of filing: **29.04.2024**

(51) International Patent Classification (IPC):
**B64D 13/06** (2006.01)    **F16L 3/02** (2006.01)
**F24F 13/02** (2006.01)

(52) Cooperative Patent Classification (CPC):
**B64D 13/06; F16L 3/06; F24F 13/0254;**
B64D 2013/0625; F16L 3/243

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **AIRBUS Operations GmbH**
**21129 Hamburg (DE)**

(72) Inventor: **Lohmar, Jens**
**21129 Hamburg (DE)**

(54) **INDIVIDUAL AIR SUPPLY SYSTEM WITH ADJUSTABLE HOSE FOR AN AIRCRAFT**

(57)    The present disclosure relates to an individual air supply system (100) having a flexible hose (180) connecting an air nozzle unit (70) with an air manifold (60). The hose has a layout consisting of a substantially straight part and a bent part irrespective of a position of the air nozzle unit relative to a connector (162) of the manifold and along the manifold. Further disclosed is an aircraft having such individual air supply system.

Figure 4

EP 4 644 251 A1

## Description

The present disclosure generally relates to an individual air supply system with adjustable hose for an aircraft, and an aircraft having such individual air supply system. Particularly, the present disclosure relates to an individual air supply system having alignment means aligning a flexible hose to a substantially straight part and a substantially bent part in each position of an air nozzle relative to an air manifold, as well as an aircraft having such system.

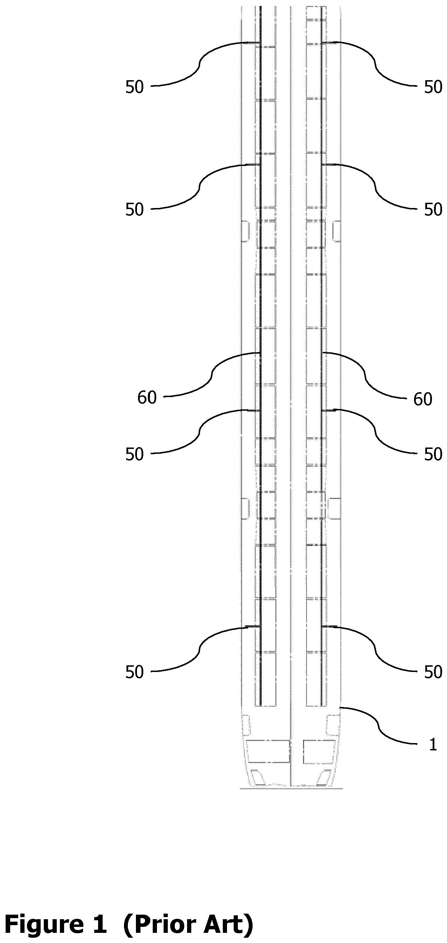

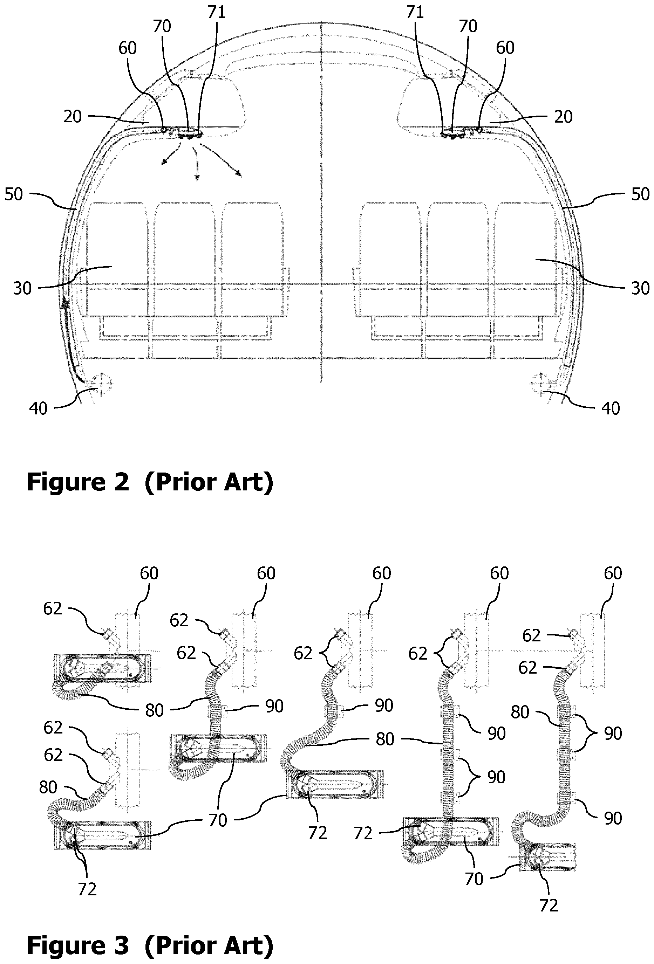

An aircraft 1, as illustrated in Figures 1 and 2, regularly includes overhead stowage compartments 20 and the seat rows 30, wherein fresh air is provided to the seat rows 30, amongst others, via an individual air supply system.

A conventional individual air supply system includes a main air manifold 40 running along the longitudinal direction of the aircraft 1, from which riser ducts 50 extend towards the overhead stowage compartment 20, where they feed the air into individual air manifolds 60 also running along the longitudinal direction of the aircraft 1. The individual air supply is provided via individual air (outlet) nozzles installed in a respective air gasper unit 70 arranged above the seat rows 30. Such air gasper units 70 are part of a passenger service unit (PSU), which further includes loudspeakers, reading lights, indication lights and the like.

Figure 3 schematically illustrates conventional air gasper units 70 and their connection to the individual air manifolds 60. Each individual air manifold 60 is provided with a plurality of outlets 62 along its longitudinal extent. Depending on the location of a seat rows 30, an individual air gasper unit 70 is mounted above such seat row 30. This, however, requires the provision of a flexible hose 80 connecting an outlet 62 of the manifold 60 with an inlet 72 of the individual air gasper unit 70. In addition, the manifold 60 can be equipped with a pair of outlets 62, and the individual air gasper unit 70 can be equipped with a pair of inlets 72, both of which face different directions facilitating the connection of the flexible hose 80.

As can be derived from Figure 3, depending on the distance between the individual air gasper unit 70 and the nearest outlet 62 various layouts of the hose 80 will be required. The length of the hose 80 has to be adjusted (cut) typically between 200 mm and 900 mm. Furthermore, with increasing length of the hose 80 a fixation 90 is required, in order to avoid catching the hose 80 in or with another component of the PSU. Individual fixations 90 have to be provided and mounted, typically every 130 mm to 190 mm along the hose 80.

It is therefore an object of the present disclosure to provide an improved individual air supply system, particularly a system that allows easier and faster installation.

This object is solved by the present invention as defined in the independent claims. Preferred embodiments are defined by the dependent claims.

According to a first aspect to better understand the present disclosure, an individual air supply system for an aircraft comprises an air manifold, a plurality of connectors in the air manifold, an air nozzle unit comprising at least one individual air nozzle, and a flexible hose of fixed length coupled to one of the plurality of connectors and configured to fluidly connect the air nozzle unit with the air manifold. Each of the connectors is an outlet of the manifold, where air conducted by the manifold can be discharged, particularly into the flexible hose and towards the air nozzle unit.

The individual air supply system further comprises alignment means configured to align the flexible hose to have a layout consisting of a substantially straight part and a bent part irrespective of a position of the air nozzle unit relative to the one connector along the manifold. In other words, the layout of the flexible hose has a substantially straight part and a bent part with any position of the air nozzle unit along the air manifold. It is to be understood that the position of the air nozzle unit is restricted due to the fixed length of the hose, i.e. the air nozzle unit can take any position along the air manifold between a front and aft limit, wherein the one connector of the air manifold is arranged also between the front and aft limit.

The layout of the flexible hose is to be understood as a form of the hose in a plan view. For instance, the substantially straight part can be arranged parallel to the manifold, for example, parallel to a longitudinal direction of the manifold (and hence the longitudinal direction of the aircraft as the air manifold usually extends in a front to aft direction of the aircraft). The bent part bridges a gap between the one connector (where the hose is connected to) and the air nozzle unit, such as an inlet of the air nozzle unit (to which the hose is also connected). The gap can be understood as a transverse distance between a longitudinal axis (in view of the aircraft) running through the one connector and a longitudinal axis (in view of the aircraft) running through a side or the inlet of the air nozzle unit.

Thus, the air nozzle unit can be provided anywhere along the air manifold (also referred to as an individual air manifold), hence, anywhere along a longitudinal direction of the air manifold as well as of the aircraft, irrespective of the one connector. When (re-)positioning the air nozzle unit along the air manifold, the hose of fixed length still connects the one connector with an inlet of the air nozzle unit, and the bent part will be relocated along the manifold. Furthermore, the substantially straight part moves together with the air nozzle unit and may become shorter or longer due to the position of the bent part.

Therefore, the flexible hose of the individual air supply system allows an independent positioning of the air nozzle unit. Particularly, the air nozzle unit can be positioned irrespective of or independent from a location of the plurality of connectors in the air manifold. This significantly facilitates installation of the air nozzle unit, as the hose can be maintained unaltered (i.e., without cutting or replacement). In addition, in case of a plurality of air nozzle units installed in the individual air supply system, the same hose of fixed length can be employed for any air nozzle unit, so that the number of part types can be reduced and/or a cutting of a hose to the required length (cf. Figure 3) can be omitted.

In an implementation variant, the flexible hose can be configured to be arranged in a channel of an interior component of the aircraft. The gap spanned by the bent part of the flexible hose then corresponds to a width of such channel. As a mere example, the channel can be a personal service channel, in which a plurality of PSUs and other components and blanks are installed.

In an implementation variant, the alignment means can comprise a rail, and a hose mount configured to hold the flexible hose, the hose mount being slidably coupled with the rail. Thus, the position of the flexible hose (i.e., the layout of the hose) can be supported by the hose mount. In other words the flexible hose is kept in position by being supported by the hose mount. Positioning or repositioning the air nozzle unit can easily be achieved, since the hose mount can slide along the rail, i.e. is not at a fixed position as the conventional fixations (cf. Figure 3).

In an implementation variant, the rail can be curved in at least a portion thereof. In other words, the entire rail can be curved or the rail can include a curved part, for example, can include a straight part and a curved part. The curved form of the rail allows the hose mount to move along the curved path of the rail facilitating the bent part of the flexible hose to also move, for example, when (re-) positioning the air nozzle unit along the air manifold.

In an implementation variant, the hose mount can comprise a clamp configured to hold the flexible hose, and a swivel joint configured to rotate the clamp relative to the rail. Thus, the clamp forms the actual hose support. Due to the rotational freedom of the clamp, a longitudinal axis or tangent of the hose can also rotate, which facilitates moving the bent part along the air manifold.

In an implementation variant, the swivel joint can be a disc or circular nut slidably coupled with the rail. For instance, the disc or circular nut can lay on one or more surfaces of the rail, on which it can slide or glide. As a mere example, the disc or circular nut can form part of the hose mount, such as a top portion thereof, under which the clamp is arranged. Due to the round circumference of the disc or circular nut it can rotate relative to the rail, hence forming a swivel joint for the clamp.

In an implementation variant, the alignment means can comprise a locking means configured to lock the hose mount with respect to the rail. Thus, the position of the flexible hose (i.e., its layout) can be fixed, for example, once the air nozzle unit has been correctly positioned and the bent part of the flexible hose has been formed at the final position.

In an implementation variant, the hose mount comprises a cable holder configured to hold a flexible cable. This allows positioning the flexible cable parallel to the flexible hose, i.e., the flexible cable and flexible hose can have the same or at least a very similar layout (in plan view). As a mere example, the air nozzle unit regularly forms part of a personal service unit (PSU), which usually requires an electrical and/or data connection (e.g., to operate lights, indicators, buttons, user interfaces and the like). The individual air supply system, hence, can be employed to provide a corresponding (electrical) cable to the PSU and having the same advantages as the flexible hose, such as not to be caught by another component of the PSU and to be independently arrangeable of any electric/data supply for the PSU.

In an implementation variant, the rail can be configured to be mounted to an underside of an overhead stowage compartment. Regularly, a PSU and a hence, an air nozzle unit is installed at an underside of an overhead stowage compartment, such as in a personal service channel (PSC). Installing the rail at the underside of the overhead stowage compartment allows providing the flexible hose at the top of such PSC, where it will not be in the way of other components.

In an implementation variant, the alignment means can comprise a plurality of rails, and a plurality of hose mounts, wherein each hose mount is configured to hold the flexible hose and is slidably coupled with one of the plurality of rails. Thus, the position of the flexible hose (i.e., the layout of the hose) can be supported by the plurality of hose mounts. In other words the flexible hose is kept in position by being supported by the plurality of hose mounts. The implementation variants disclosed with respect to one rail and hose mount apply correspondingly with respect to each of the plurality of rails and hose mounts.

In an implementation variant, the bent part of the flexible hose can form a semicircle. The radius of such semicircle can be half of the gap spanned by the hose.

Furthermore, depending on the position of the air nozzle unit relative to the one connector, the substantially straight part can be arranged on one side of the semicircle or is present at both sides of the semicircle. As a mere example, the flexible hose can be coupled to the one connector of the air manifold at or close to the beginning of the semicircle. Thus, a first limit of positioning the air nozzle unit along the air manifold can be defined by the arc length of the semicircle plus the length of the substantially straight part (at the end of which the air nozzle unit is connected). A second limit of positioning the air nozzle unit along the air manifold can be defined by the length of the substantially straight part plus the arc length of the semicircle, when the air nozzle unit is moved along the air manifold and the semicircle is now formed by a portion of the flexible hose previously forming at least a portion of the substantially straight part. In other words, at the second limit, an end of the semicircle is now formed at or close to the air nozzle unit, while the one connector is coupled with the flexible hose at an end of the substantially straight part.

In an implementation variant, the alignment means can comprise a pair of side bars, each side bar being arranged parallel to the air manifold and configured to support the substantially straight part of the flexible hose. As a mere example, due to the flexibility of the hose the hose biases against the side bars, where it finds support. Thus, the rail and hose mount may be omitted, but can be provided in addition to the side bars.

For instance, each side bar can have at least one recess configured to receive a respective portion of the substantially straight part of the hose. The bent part of the flexible hose bridges the gap between the oppositely arranged sidebars and presses the ends of the flexible hose (including the straight part) into the side bars.

In an implementation variant, each side bar can have a round recess, into which the hose is pressed by the biasing force inherent to the flexible hose. In other words, a side portion of the hose is received in the round recess of each sidebar. For instance, the round recess may have a shape corresponding to the side portion of the hose.

In an implementation variant, each side bar can have a plurality of recesses, each recess being configured to receive a portion of the hose. The plurality of recesses can be arranged at positions substantially opposite to one another with respect to the hose. For instance, the hose can be received in each of the plurality of recesses and a clamping force of the side bar can act on the hose, thereby holding the hose.

According to a second aspect to better understand the present disclosure, an aircraft comprises at least one air supply system of the first aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:

Figure 1    schematically illustrates a plan view of a conventional aircraft having an air supply system;

Figure 2    schematically illustrates a cross-section of a conventional aircraft having an air supply system;

Figure 3    schematically illustrates various conventional configurations of air gasper units;

Figure 4    schematically illustrates a plan view of an individual air supply system in accordance with the present disclosure;

Figure 5    schematically illustrates different layouts of a flexible hose connected to an air nozzle unit;

Figure 6    schematically illustrates a top view and a cross-sectional view of an exemplary alignment means;

Figure 7    schematically illustrates a top view of a flexible hose layout and its mathematical principles as well as another exemplary alignment means;

Figure 8    schematically illustrates a top view of an individual air supply system including an electric harness; and

Figure 9    schematically illustrates a cross-sectional view of an exemplary alignment means including the electric harness.

In the following description, for purposes of explanation and not limitation, specific details are set forth in order to provide a thorough understanding of the present disclosure. It will be apparent to one skilled in the art that the present disclosure may be practiced in other implementations that depart from these specific details.

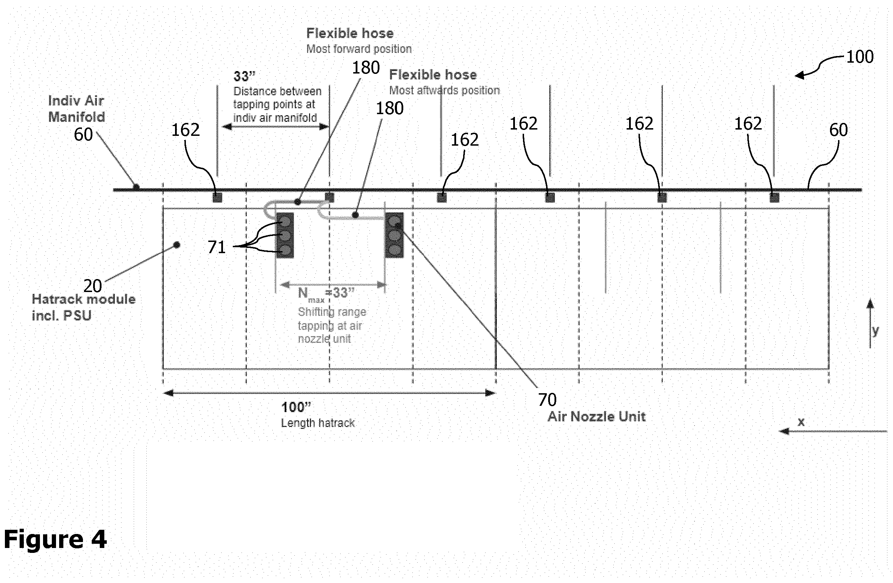

Figures 1 to 3 schematically illustrate a conventional air supply. Figures 4 to 9 schematically illustrate examples of an individual air supply system, in accordance with the present disclosure. Components that can be used in the individual air supply system 100, in accordance with the present disclosure, are provided with same reference numerals, such as the air gasper unit or air nozzle unit 70 and the air manifold 60.

Figure 4 schematically illustrates a plan view of an individual air supply system 100 in accordance with the present disclosure. The individual air supply system 100 comprises an air manifold 60 having a plurality of connectors 162. Each connector 162 is configured to discharge air from the air manifold 62 provided to another component. For illustrative purposes, a footprint of overhead stowage compartments 20 (hatrack modules) is also shown in Figure 4, as a personal service unit (PSU) is regularly provided underneath such hatrack 20.

An air nozzle unit 70 having a plurality of individual air nozzles 71 is illustrated at two positions, which forms front and aft limits of a range of positions, where the air nozzle unit 70 can be provided with the same flexible hose 180. The flexible hose 180 is of fixed length and coupled to one of the plurality of connectors 162 of the air manifold 60 and is further configured to fluidly connect the air nozzle unit 70 with the air manifold 60.

The flexible hose has a layout consisting of a substantially straight part and a bent part. As can be derived from Figure 4, the bent part is present at each "limiting" position, i.e., either beginning at the connector 162 or ending at the air nozzle unit 70. The substantially straight part is accordingly arranged either at the air nozzle unit 70 or the connector 162. It is to be understood that the air nozzle unit 70 can be positioned anywhere along the air manifold 60 between both "limiting" positions. At such intermediate position, the bent part will still be present, while the substantially straight part will be divided into a portion at the connector 162 and a portion at the air nozzle unit 70. This will be explained in more detail below.

The range of positions of the air nozzle unit 70 can have a length (in longitudinal direction of the air manifold 60 and also of the aircraft 1; X-axis) corresponding to a maximum distance between two seat rows 30 (cf. Figure 2). As a mere example, Figure 4 illustrates 33 inches (83.82 cm) as the maximum distance between the limiting positions, i.e. the front and aft limits of the range of positions of the air nozzle unit 70.

Furthermore, the plurality of connectors 162 in the air manifold 60 can also be spaced apart by the same distance, for example, 33 inches (83.82 cm). It is to be understood that at the front and aft ends of the air manifold 60 connectors 162 can be provided at a smaller distance. This may be necessary to adapt to a different number of seat rows 30 installed in the aircraft 1 having a different spacing. For instance, the distance between adjacent seat rows 30 can vary between 28 inches (71.12 cm) and 33 inches (83.82 cm), which may lead to a different number of seat rows 30 in the entire aircraft 1. Thus, a different number of connectors 162 may be employed, and a different number of flexible hoses 180 will be connected to the connectors 162. By having more connectors 162 per unit length at the front and aft end of the air manifold 60, this different number of hoses 180 to be connected can be compensated. Unused connectors 162 may be closed with a corresponding cap (not illustrated). It is further to be understood that additional connectors 162 may be provided somewhere along the air manifold 60, i.e. not only at the front and aft ends thereof.

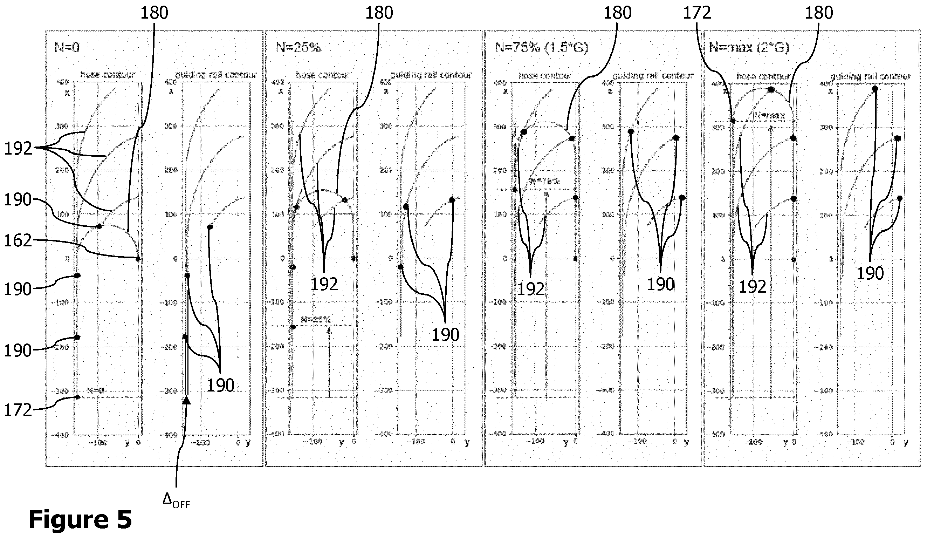

Figure 5 schematically illustrates different layouts of a flexible hose 180 connected to an air nozzle unit 70, particularly to an inlet 172 of the air nozzle unit 70. Figure 5 includes four diagrams, each illustrating the layout or contour of the hose 180 (to the left) and possible fixation points 190 (to the right in each diagram). The diagrams correspond to a respective position of the air nozzle unit between the "limiting" positions referred to as diagrams N=0 and N=max, while the remaining diagrams reflect intermediate positions.

The possible fixation points 190 correspond to alignment means in the form of a rail 192 and a hose mount 190 configured to hold the flexible hose 180 in a slidable manner.

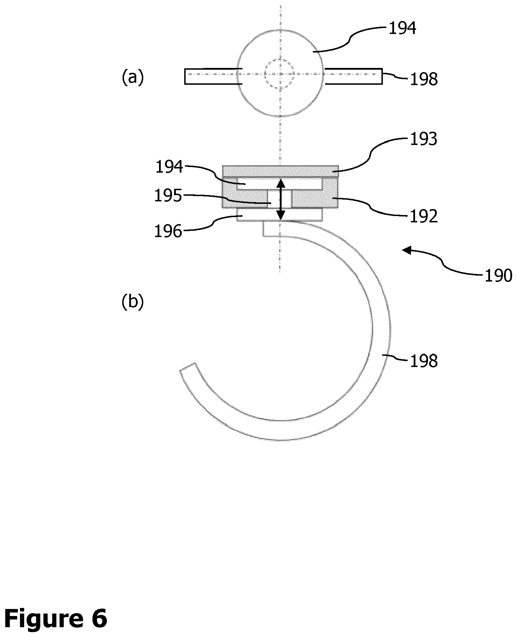

Figure 6(a) schematically illustrates a top view and Figure 6(b) schematically illustrates a cross-sectional view of an exemplary alignment means in form of a rail 192 and a hose mount 190. In more detail, the hose mount 190 can comprise a clamp 198 configured to hold the flexible hose 180 (not illustrated in Figure 6), and a top portion (194, 195) coupled to the rail 192. The rail 192 may substantially have a U-shape with the open side facing upwards and a longitudinally arranged slit (i.e., the rail 192 can be made from two L-shaped profiles).

Alternatively, the rail 192 can be closed at the top with a lid 193. It is to be understood that instead of a separate lid 193, the rail 192 can be made from a substantially C-shaped profile, with the open side (slit) facing downwards.

In any case, the top portion 194 of the hose mount 190 can lay in the rail 192, while a pin or strut 195 of the hose mount 190 is arranged in the slit or opening of the rail 192 and holds the clamp 198. Thus, the hose mount 190 can slide along the rail 192 by the top portion 194 gliding or sliding on the corresponding surface of the rail 192.

The top portion 194 and the pin or strut 195 can together form a swivel joint configured to rotate the clamp relative to the rail. As a mere example, the swivel joint can be formed by a disc or circular nut 194, i.e., the top portion 194 can consist of a disc or circular nut. Due to a round circumference of the disc or circular nut 194, the top portion 194 and the pin or strut 195 can rotate relative to the rail 192.

It is to be understood that the swivel joint can also be formed by a respective rotatable connection between clamp 198 and strut 195. Furthermore, another rotatable connection can be provided by a lower disc 196 or the like.

Alternatively or additionally, the lower disc 196 can form a locking means configured to lock the hose mount 190 with respect to the rail 192. As a mere example, the lower disc 196 can be a nut or the like on a thread (not illustrated) which can be screwed towards the rail 192, so that the rail 192 can be squeezed between the top portion 194 and the lower disc 196.

Likewise, for example if the lid 193 of the rail 192 is not present, the top portion 194 can be screwed upwards, so that it presses against any item above the rail 192, such as an underside of an overhead stowage compartment 20 or the like.

This principle is schematically illustrated by a double arrow indicating that the lower disc 196 and/or the top portion 194 may be arranged with varying distances, so that a pinching or pressing of one or both of these elements against the rail 192 or surrounding components 20 hinders the hose mount 190 from moving relative to the rail 192 (i.e., locks the hose mount 190).

Referring back to Figure 5, each fixation point 190 corresponds to a hose mount 190. A distance between such hose mounts 190 along the flexible hose 180 (as well as between an end of the hose 180 and such hose mounts 190) can be between 13 to 20 cm. A hose 180 with a length between 50 to 90 cm, preferably 60 cm, may be hold by more than one hose mount 190, such as the exemplarily illustrated three hose mounts 190 of Figure 5.

The four diagrams of Figure 5 correspond to 4 positions of the air nozzle unit 70, wherein the first diagram (N = 0) corresponds to the aft most position of the air nozzle unit 70, where the bent part of the flexible hose 180 begins at the connector 162. The second diagram (N = 25%) corresponds to an intermediate position, where the air nozzle unit 70 has been shifted along the air manifold 60 and towards the connector 162, the third diagram (N = 75 %) corresponds to an intermediate position, where the air nozzle unit 70 has been shifted along the air manifold 60 and beyond the connector 162, while the fourth diagram (N = max) corresponds to the front most position of the air nozzle unit 70, where the bent part of the flexible hose 180 begins at the inlet 172 of the air nozzle unit 70.

Between the front and aft limiting positions of the air nozzle unit 70, each fixation point 190 moves along a certain path. In order to maintain the bent part of the hose 180, each path has at least a curved portion. Thus, the rail 192 is curved in at least a portion thereof. In the example of Figure 5, three rails 192 are illustrated, each having a different shape and each corresponding to the movement path of one of the three hose mounts 190.

It is to be understood that each of the fixation point 190 moves along a different path due to their respective location along the direction of the air manifold 60. Therefore, each fixation point 190 (i.e., each hose mount 190) is coupled to one rail 192 having a shape corresponding to the respective path of the respective fixation point 190.

As a mere example, each of the rails 192 and particularly their path is curved in such a manner that an end of each rail 192 facing the air manifold 60 forms a maximum in x-direction, i.e., is closest to the front limiting position of the air nozzle unit 70. Thus, each of the hose mounts 190 cannot move back towards the aft limiting position of the air nozzle unit 70 when following the rail 192 in the same direction.

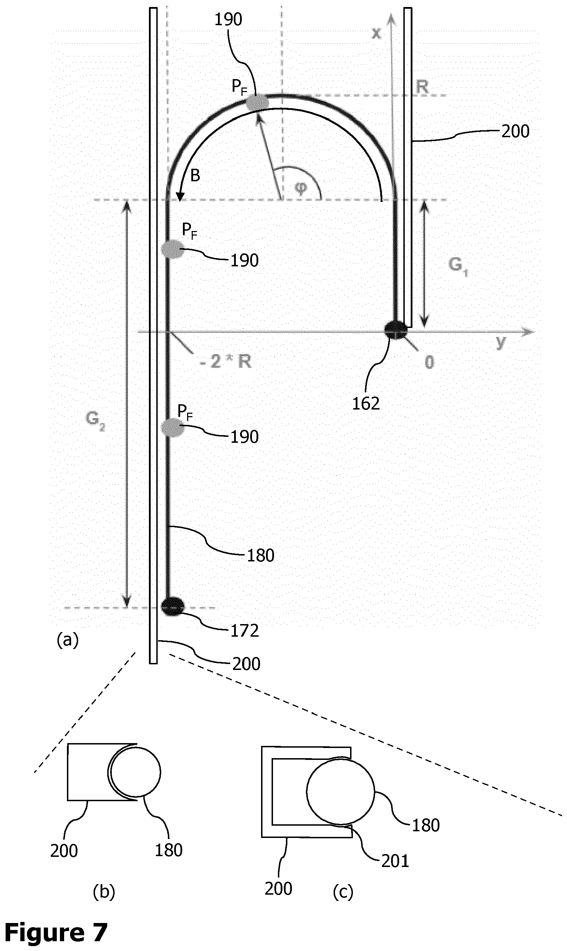

Figure 7(a) schematically illustrates a top view of a flexible hose layout and its mathematical principles and Figures 7(b) and 7(c) schematically illustrate respective options for another exemplary alignment means.

Turning first to the layout of the flexible hose 180, to explain the mathematical principles the hose 180 is illustrated as extending from the connector 162 of the air manifold 60 to the inlet 172 of the air nozzle unit 70. The hose has a first straight part $G_1$ at the connector 162 and a second straight part $G_2$ at the inlet 172, i.e., the air nozzle unit 70 is arranged at an intermediate position between the front and aft limiting positions.

The x/y-coordinates are described in aircraft coordinates (x in flight direction, y crosswise to flight direction; see also Figure 4). The hose 180 has a length L that can be separated in a bent part and a (substantially) straight part. The bent part can be described with radius R.

When forming a semicircle, the bent part of the hose 180 has the circumference of

$$B = \pi * R.$$

The straight part of the hose 180 has an overall length of

$$G = L - B.$$

The straight length G separates into two straight parts:

- $G_1$ is the straight part at the connector 162 (tapping from the individual air manifold 60), i.e. y=0;
- $G_2$ is the straight part at the inlet 172 (tapping to the air nozzle unit 70), i.e. y=2* R.

As illustrated in Figure 4, the end of the hose 180 at the air nozzle unit 70 can be shifted along the x-direction. The position of the end of the hose 180 at the air nozzle unit 70, i.e. at inlet 172, is described with N as the distance in x-direction from the tapping point at the individual air manifold 60, i.e., from the connector 162. The maximum distance of this shifting is equal to 2 * G (i.e., N = max in Figure 4).

With that $G_1$ and $G_2$ can be determined with:

-

$$G_1 = 0.5 * N;$$

-

$$G_2 = G - 0.5 * N.$$

$P_F$ describes a fixation point 190 along the hose 180, where the fixation point 190 can be arbitrarily chosen on the line along the hose 180 with

$$F = [0 ... L],$$

i.e.:

- $P_0 \rightarrow$ at connector 162 of individual air manifold 60;
- $P_L \rightarrow$ at inlet 172 of air nozzle unit 70.

When the fixation point 190 ($P_F$) is on the bent part, which can be the case for each of the fixation points 190 depending on the position of the air nozzle unit 70 between N=0 and N=max, the angle $\varphi$ is:

$$\varphi = (P_F - G_1) / R$$

The rails 192 require an offset $\Delta_{OFF}$ (Figure 4) to each other in y-direction in order to avoid clashing. The exact x/y-coordinates can be determined for each fixation point 190 by taking the offset $\Delta_{OFF}$ into account.

The x/y-coordinates of any fixation point 190 ($P_F$) can be described as a function of R, L and N:

- if $P_F < G_1$

  o

  $$y = 0 + \Delta \text{offset}$$

  o

  $$x = P_F$$

- if PF < (G1 + B)

  o

  $$y = R * \cos(\varphi) - R + \Delta_{OFF}$$

  o

  $$x = R * \sin(\varphi) + G_1$$

- if PF > (G1 + B)

  o

  $$y = -2 * R + \Delta_{OFF}$$

  o

  $$x = 2 * G_1 + P - B.$$

Depending on the position of the air nozzle unit 70, i.e. N = [0 ..max], the above equations for the x/y-coordinates have to be evaluated individually. This is due to the influence of N on $G_1$ and $G_2$.

Figure 7(a), 7(b) and 7(c) further schematically illustrate another exemplary alignment means 200. It is to be understood that this other exemplary alignment means 200 can be employed without the alignment means including fixation points 190 and rails 192 or can be employed in addition to the alignment means including fixation points 190 and rails 192.

The other exemplary alignment means comprises a pair of side bars 200, each bar 200 being arranged parallel to the air manifold 60 and configured to support the substantially straight part(s) $G_1$ and $G_2$ of the flexible hose 180. Such support can be achieved, according to the option of Figure 7(b) by a round recess in each side bar 200 configured to receive a side portion of the hose 180. Due to the flexibility of the hose 180, the straight part(s) $G_1$ and $G_2$ of the flexible hose 180 will be pressed into the opposite recesses of the pair of side bars 200, so that the hose 180 is sufficiently supported. When moving the air nozzle unit 70 along the x-direction, the straight part(s) $G_1$ and $G_2$ of the flexible hose 180 will change in respective length but will remain in the recess of the sidebars 200.

Figure 7(c) illustrates a further option of the side bars 200, particularly a further exemplary cross-sectional shape of the side bar 200. Here the side bars 200 are provided with a plurality of recesses 201, which are arranged substantially opposite to one another. For instance, a pair of recesses 201 can be provided in each side bar 200. The side bars 200 can be configured to provide a clamping force onto the hose 180, for example, by having a cross-sectional size/dimension slightly smaller than a cross-sectional size/dimension of the hose 180 in the same direction. This allows receiving the hose 180 in the plurality of recesses 201 (and simultaneously within the respective side bar 200) and holding the hose 180, particularly the straight part(s) $G_1$ and $G_2$ thereof.

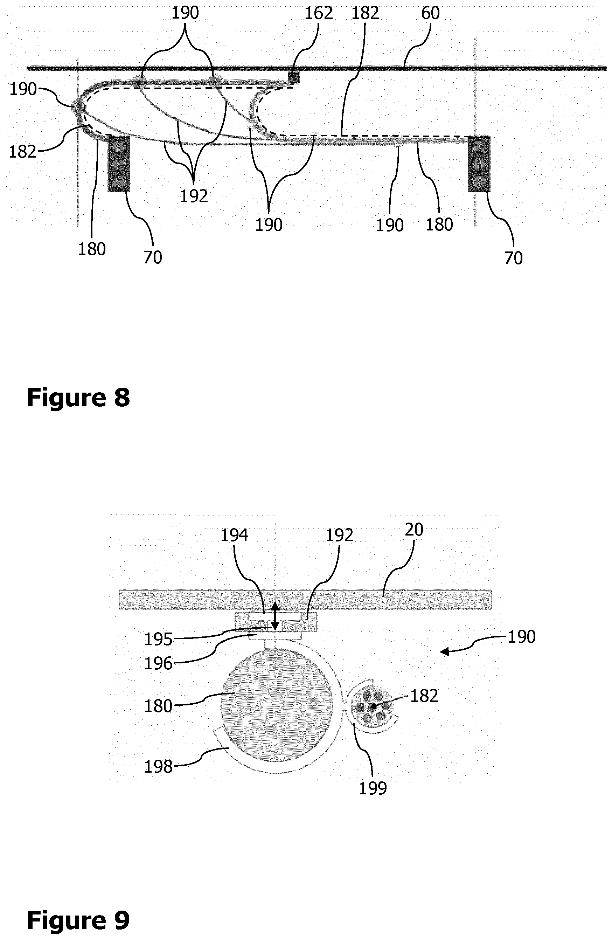

Figure 8 schematically illustrates a top view of an individual air supply system 100 including an electric harness 182. Figure 8 corresponds to a section of Figure 4, so that a description of features already explained with respect to Figure 4 is omitted to avoid redundancies. Besides an air nozzle unit 70, a PSU regularly requires an electrical and/or data connection. In order to provide an electric harness or cable 182 or the like, the individual air supply system 100 can be equipped with means to hold and support such harness or cable 182.

With additional reference to Figure 9, which schematically illustrates a cross-sectional view of the exemplary alignment means including the electric harness or cable 182, the harness or cable 182 can be supported by the hose mount 190. In more detail, the hose amount 190, such as the clamp 198, can comprise a cable holder 199 configured to hold a flexible cable 182. Such cable holder 199 can likewise be implemented as a clamp or similarly shaped component. By integrating the cable holder 199 into the hose mount 190 (or mounting the cable holder 199 thereto) the (re-) positioning of the PSU moves the flexible hose 180 as well as the flexible cable 182 in the manner illustrated in Figure 8 and explained with respect to Figures 4 to 7.

Figure 9 further illustrates another exemplary implementation detail, that may likewise be applied to the individual air supply system 100 of Figure 6. Specifically, the top portion 194 is arranged on top of the rail 192. The rail 192 is opened at its upper side. This allows using the top portion 194 of the hose mount 190 to lock the hose mount 190 relative to the rail 192. As illustrated by a double arrow, the top portion 194 can be configured to be moved up and down, i.e., relative to the component 20 above the rail 192, such as relative to an underside of an overhead stowage compartment 20. As a mere example, a screw or a threaded bolt (not illustrated) may be employed to move the top portion 194 up and down. In an upper position, the top portion 194 may contact the underside of the component 20 and then be pressed against the underside of the component 20. Thus, the hose mount 190 is locked relative to the rail 192 as well as relative to the component 20.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

**Claims**

1. An individual air supply system (100) for an aircraft (1), comprising:

   an air manifold (60);
   a plurality of connectors (162) in the air manifold (60);
   an air nozzle unit (70) comprising at least one individual air nozzle (71); and
   a flexible hose (180) of fixed length coupled to one of the plurality of connectors (162) and configured to fluidly connect the air nozzle unit (70) with the air manifold (60),
   **characterised in that** the individual air supply system (100) further comprises:
   alignment means (190, 200) configured to align the flexible hose (180) to have a layout consisting of a substantially straight part and a bent part irrespective of a position of the air nozzle unit (70) relative to the one connector (162) along the manifold (60).

2. The air supply system (100) of claim 1, wherein the alignment means comprises:

   a rail (192); and
   a hose mount (190) configured to hold the flexible hose (180), the hose mount (190) being slidably coupled with the rail (192).

3. The air supply system (100) of claim 2, wherein the rail (192) is curved in at least a portion thereof.

4. The air supply system (100) of claim 2 or 3, wherein the hose mount (190) comprises:

   a clamp (198) configured to hold the flexible hose (180); and
   a swivel joint (194, 195) configured to rotate the clamp (198) relative to the rail (192).

5. The air supply system (100) of claim 4, wherein the swivel joint (194) is a disc or circular nut slidably coupled with the rail (192).

6. The air supply system (100) of one of claims 2 to 5, wherein the alignment means comprises:
   a locking means (194, 196) configured to lock the hose mount (190) with respect to the rail (192).

7. The air supply system (100) of one of claims 2 to 6, wherein the hose mount (190) comprises a cable holder (199) configured to hold a flexible cable (182).

8. The air supply system (100) of one of claims 2 to 7, wherein the rail (192) is configured to be mounted to an underside of an overhead stowage compartment (20).

9. The air supply system (100) of one of claims 1 to 8, wherein the bent part of the flexible hose (180) forms a semicircle, and wherein, depending on the position of the air nozzle unit (70) relative to the one connector (162), the substantially straight part is arranged on one side of the semicircle or is present at both sides of the semicircle.

10. The air supply system (100) of one of claims 1 to 9, wherein the alignment means comprises:

    a pair of side bars (200), each side bar (200) being arranged parallel to the air manifold (60) and configured to support the substantially straight part of the flexible hose (180),
    wherein preferably each side bar (200) has at least one recess configured to receive a respective portion of the substantially straight part of the hose (180).

11. An aircraft (1), comprising:
    at least one air supply system (100) of one of claims 1 to 10.

**Figure 1 (Prior Art)**

**Figure 2 (Prior Art)**

**Figure 3 (Prior Art)**

**Figure 4**

EP 4 644 251 A1

**Figure 5**

**Figure 6**

**Figure 7**

# Figure 8

# Figure 9

Europäisches
Patentamt

European
Patent Office

Office européen
des brevets

# EUROPEAN SEARCH REPORT

**Application Number**

EP 24 17 3131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/001726 A1 (CLAFLIN SHAWN A [US] ET AL) 5 January 2017 (2017-01-05) * paragraph [0002] - paragraph [0095]; figures 6, 9, 16-19 * | 1-11 | INV. B64D13/06 F16L3/02 F24F13/02 |
| X | US 3 330 506 A (ROBILLARD ROBERT J ET AL) 11 July 1967 (1967-07-11) | 1-3,8,9, 11 | |
| A | * column 2 - column 5; figures 3, 4 * | 4-7,10 | |
| A | US 2003/207666 A1 (CROOK DALE J [US]) 6 November 2003 (2003-11-06) * paragraph [0001] - paragraph [0011]; figure 7 * | 1-11 | |
| A | CN 218 294 728 U (GAOYI AUTO PARTS DALIAN CO LTD) 13 January 2023 (2023-01-13) * the whole document * | 1-11 | |
| A | US 2012/015595 A1 (SABADIE LIONEL [FR] ET AL) 19 January 2012 (2012-01-19) * paragraph [0001] - paragraph [0020]; figure 7 * | 1-11 | TECHNICAL FIELDS SEARCHED (IPC) |
| A | CN 206 145 264 U (CRRC ZHUZHOU LOCOMOTIVE CO LTD) 3 May 2017 (2017-05-03) * the whole document * | 1-11 | B64D F16L F24F |
| A | CN 205 689 913 U (NINGBO FUSHI AUTOMOBILE COMPONENTS CO LTD) 16 November 2016 (2016-11-16) * the whole document * | 1-11 | |

The present search report has been drawn up for all claims

| Place of search | Date of completion of the search | Examiner |
|---|---|---|
| Munich | 12 September 2024 | Morasch, Alexander |

EPO FORM 1503 03.82 (P04C01)

## ANNEX TO THE EUROPEAN SEARCH REPORT
## ON EUROPEAN PATENT APPLICATION NO.

EP 24 17 3131

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2024

| Patent document cited in search report | | Publication date | Patent family member(s) | | Publication date |
|---|---|---|---|---|---|
| US 2017001726 A1 | | 05-01-2017 | CN | 107709160 A | 16-02-2018 |
| | | | EP | 3317181 A1 | 09-05-2018 |
| | | | US | 2017001726 A1 | 05-01-2017 |
| | | | US | 2018265200 A1 | 20-09-2018 |
| | | | WO | 2017003814 A1 | 05-01-2017 |
| US 3330506 | A | 11-07-1967 | NONE | | |
| US 2003207666 A1 | | 06-11-2003 | AU | 3481301 A | 14-08-2001 |
| | | | CA | 2399104 A1 | 09-08-2001 |
| | | | JP | 2003521667 A | 15-07-2003 |
| | | | US | 6354937 B1 | 12-03-2002 |
| | | | US | 2003207666 A1 | 06-11-2003 |
| | | | WO | 0157450 A1 | 09-08-2001 |
| CN 218294728 | U | 13-01-2023 | NONE | | |
| US 2012015595 A1 | | 19-01-2012 | EP | 2407379 A1 | 18-01-2012 |
| | | | FR | 2962715 A1 | 20-01-2012 |
| | | | US | 2012015595 A1 | 19-01-2012 |
| CN 206145264 | U | 03-05-2017 | NONE | | |
| CN 205689913 | U | 16-11-2016 | NONE | | |

EPO FORM P0459

For more details about this annex : see Official Journal of the European Patent Office, No. 12/82